Europäisches Patentamt

European Patent Office

Office européen des brevets

(19)

(11) Veröffentlichungsnummer: **0 286 985 B1**

(12) **EUROPÄISCHE PATENTSCHRIFT**

(45) Veröffentlichungstag der Patentschrift: **16.10.91**

(51) Int. Cl.5: **B23Q 7/14, B23Q 16/00**

(21) Anmeldenummer: **88105597.4**

(22) Anmeldetag: **08.04.88**

(54) Bearbeitungsmaschine mit einer Einrichtung zur Aufnahme von Wechselpaletten.

(30) Priorität: **15.04.87 DE 3712883**

(43) Veröffentlichungstag der Anmeldung:
**19.10.88 Patentblatt 88/42**

(45) Bekanntmachung des Hinweises auf die
Patenterteilung:
**16.10.91 Patentblatt 91/42**

(84) Benannte Vertragsstaaten:
**DE FR GB IT SE**

(56) Entgegenhaltungen:
**DE-A- 3 628 760**
**DE-U- 7 731 756**
**GB-A- 1 096 605**

**PATENT ABSTRACTS OF JAPAN, Band 10,
Nr. 105 (M-471)[2162], 19. April 1986; & JP-
A-60 238 252 (NISUSHIN DENKI K.K.)
27-11-1985**

**PATENT ABSTRACTS OF JAPAN, Band 10,
Nr. 242 (M-509)[2298], 21. August 1986; &
JP-A-61 71 943 (TSUGAMI CORP.) 12-04-1986**

(73) Patentinhaber: **Maschinenfabrik Ravensburg
AG
Georgstrasse 24
W-7980 Ravensburg(DE)**

(72) Erfinder: **Kronstorfer, Werner
Friedenstrasse 39
W-7141 Oberstenfeld(DE)**
Erfinder: **Beyrer, Karl-Heinz
Ebertstrasse 53
W-7980 Ravensburg(DE)**

(74) Vertreter: **Patentanwälte Dipl.-Ing. E. Eisele
Dr.-Ing. H. Otten
Seestrasse 42
W-7980 Ravensburg(DE)**

Rank Xerox (UK) Business Services

## Beschreibung

Die Erfindung betrifft eine Bearbeitungsmaschine mit einer Einrichtung zur Aufnahme von Wechselpaletten nach dem Oberbegriff des Anspruchs 1.

Aus der Literaturstelle "Manfred Weck, Werkzeugmaschinen, Band 3, zweite Auflage 1982, Seite 15" ist eine solche Bearbeitungsmaschine mit einem Palettenwechselsystem bekannt, bei welchem das Beschicken der Paletten auf der vor der Maschine angeordneten Palettenladeeinrichtung erfolgt, wobei die Spannfläche zur leichteren Handhabung horizontal angeordnet ist. Die Bearbeitung des auf der Palette befestigten Werkstücks erfolgt in einer vertikalen Stellung der Palette, was unter anderem auch eine bessere Abfuhr der Späne zur Folge hat. Hierfür wird die Palette mittels einer Schwenkeinrichtung um 90° in die Vertikale geschwenkt und dann seitlich über Führungsbahnen in die Bearbeitungsstation, zum Beispiel einer Planscheibe, einer Drehbearbeitungsmaschine, geführt.

Die Anforderung an die Bearbeitungsqualität mit geringsten Toleranzen im Bereich von tausendstel Millimeter auch bei Massenfertigung in flexiblen Fertigungssystemen erfordert es, daß die Werkstücke auf den Paletten und die Paletten gegenüber der Bearbeitungsmaschine genauestens justiert sein müssen. Für die Palettenjustierung sind hierfür sehr aufwendig bearbeitete Führungsbahnen mit Anschlägen und Meßeinrichtungen bekanntgeworden. Dies erfordert einen sehr hohen technischen Aufwand an die Genauigkeit der Wechselpaletten selbst sowie der Aufnahme der Wechselpaletten an der Bearbeitungsmaschine.

Der Erfindung liegt die Aufgabe zugrunde, eine Bearbeitungsmaschine mit Wechselpaletten vorzuschlagen, die einen geringeren technischen Aufwand zur Aufnahme und Justierung der Wechselpaletten bei höchst möglichster Genauigkeit der Justierung erfordert.

Diese Aufgabe wird durch eine Bearbeitungsmaschine des Anspruchs 1 gelöst.

Vorteilhafte Weiterbildungen und Verbesserungen der erfindungsgemäßen Einrichtung sind in den Unteransprüchen angegeben.

Die Erfindung hat gegenüber den bekannten Einrichtungen den Vorteil, daß eine genaueste Justierung und Ausrichtung der in der Bearbeitungsmaschine angeordneten Wechselpalette durch einfache Mittel erfolgt, d. h. daß zunächst keine in der Herstellung aufwendige genaueste Führungssysteme zur Palettenführung notwendig sind. Vielmehr wird durch die erfindungsgemäßen prismenförmigen Anlageflächen der eigentliche Justiervorgang erst dann vorgenommen, wenn die Wechselpalette schon nahezu in ihrer Endlage angeordnet ist. Der Transport bis zu dieser Endlage kann demnach weniger präzis erfolgen. Erst der abschließende Justiervorgang der Wechselpalette gegenüber der Aufnahme der Bearbeitungsmaschine ergibt die genaueste Einstellung der Lage.

Erfindungsgemäß kann dieser abschließende Justiervorgang der Wechselpalette besonders einfach dadurch erfolgen, daß durch Drehung der Werkzeugaufnahme, insbesondere einer Sonderplanscheibe um 90° die Wechselpalette durch Eigengewicht in die genaue Endlage zu liegen kommt. Dies geschieht durch die aufeinander angepaßten prismenförmigen Anlageflächen sowohl an der Planscheibe der Bearbeitungsmaschine als auch an der Wechselpalette. Es gleiten demnach zwei aufeinander angepaßte V-förmige Flächen bis zur vollständigen Auflage aufeinander.

Das Aufeinandergleiten der V-förmigen bzw. prismenförmigen Anlageflächen geschieht vorzugsweise durch Eigengewicht der Palette. In diesem Fall ist die Winkelhalbierende der V-förmigen Flächen vertikal angeordnet. Die Anpassung der Flächen kann jedoch auch durch seitliche Krafteinwirkung auf die Palette erfolgen, falls die Winkelhalbierende der V-förmigen Anlageflächen in horizontaler Anordnung bleibt.

Die Weiterbildung der Erfindung nach Unteranspruch 2 ermöglicht ein einfaches System zur Zuführung der Wechselpalette nahezu in die Endlage für den Bearbeitungsvorgang. Hierzu ist es nicht erforderlich, daß die Rollenführung an der Planscheibe, die in eine Schmalführung in der Palette eingreift, mit höchsten Toleranzen ausgeführt ist.

Gemäß Unteranspruch 3 wird die letzte Rolle der Rollenführung als Paßrolle ausgebildet, um den Schnittpunkt der prismenförmigen Anschlagsflächen zu fixieren. Hierdurch wird die Wechselpalette zunächst in einem Punkt genauestens ausgerichtet, um sich dann im Anschlagprisma ausrichten zu können. Die Paßrolle ist hierfür möglichst im oder im Bereich des Schnittpunktes des Winkels der V-förmigen Anlageflächen angeordnet.

Gemäß der Weiterbildung der Erfindung nach Unteranspruch 4 erfolgt die Fixierung der bereits justierten Wechselpalette mittels einer T-förmigen Klemmleiste an der Sonderplanscheibe, die in eine entsprechend angepaßte Ausnehmung an der Wechselpalette eingreift und die hydraulisch von der Bearbeitungsmaschine angezogen wird.

Die Weiterbildung der Erfindung nach Unteranspruch 5 sieht vor, daß die Wechselpalette mittels einer separaten Schwenkeinrichtung aus einer horizontalen Lage in eine vertikalen Lage geschwenkt wird, um seitlich in die Bearbeitungsmaschine eingeführt zu werden.

Ein vorteilhaftes und zweckmäßiges Ausführungsbeispiel der Erfindung ist in der Zeichnung dargestellt und in der nachfolgenden Beschreibung unter Angabe weiterer Vorteile näher erläutert. Es zeigen

Fig. 1 eine Seitenansicht einer Bearbeitungsmaschine mit Aufnahmeeinrichtung für
eine Wechselpalette,

Fig. 2 eine Stirnansicht auf die Bearbeitungsstation mit seitlich angeordneter
Schwenkeinrichtung und einer Palette
in Ladeposition und

Fig. 3 eine Palette in der Indexierposition.

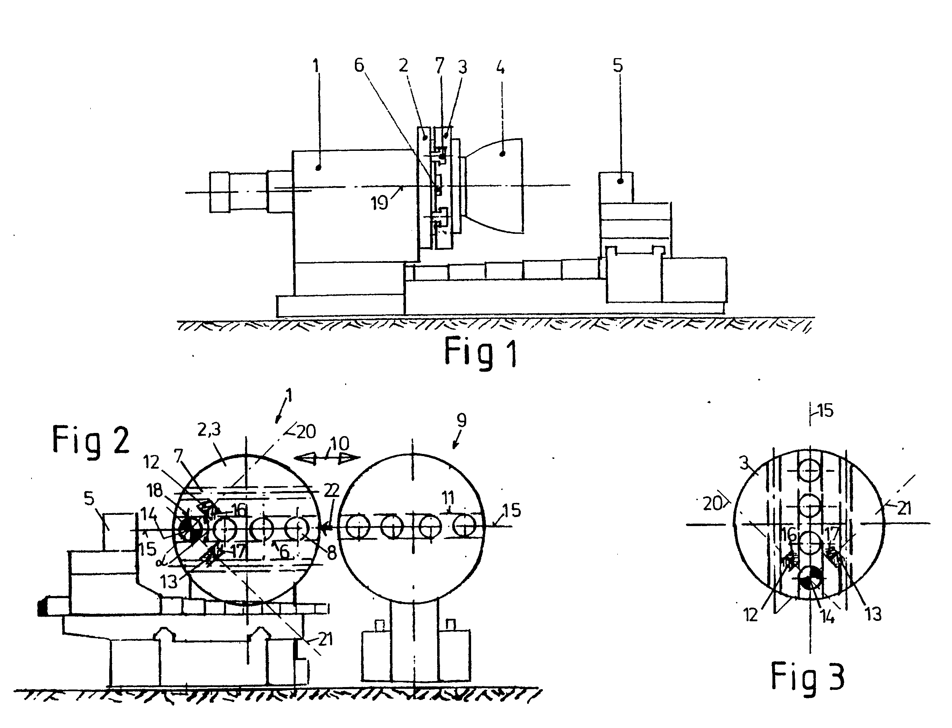

In der Fig. 1 ist eine Bearbeitungsmaschine
(1) dargestellt, zum Beispiel ein Universalbearbeitungszentrum zum Drehen, Fräsen, Bohren usw.
Hierfür weist die Bearbeitungsmaschine (1) als Palettenaufnahme eine Sonderplanscheibe auf, zur
Aufnahme der Wechselpalette (3) auf die das
Werkstück (4) aufgespannt ist. Ein Support (5)
dient zur Aufnahme des Werkzeugs. Die Wechselpalette (3) weist eine im Querschnitt rechteckförmige Schmalführung (6) auf, welche zur seitlichen
Einführung der Wechselpalette (3) zur Bearbeitungsstation dient. Eine T-förmige Klemmleiste (7)
an der Sonderplanscheibe (2) greift in eine entsprechend ausgebildete T-förmige Nut in der Wechselpalette (3) ein und dient zur reibschlüssigen Verbindung von Sonderplanscheibe (2) und Wechselpalette (3) durch hydraulisches Anziehen.

In Fig. 2 ist die Wechselpalette in Ladeposition
dargestellt. Die in Fig. 2 in Stirnansicht dargestellte
Wechselpalette (3) zeigt die horizontale Schmalführung (6), die mit der Rollenbahn (8) der Sonderplanscheibe (2) in Eingriff steht. Weiterhin ist die T-
förmige Klemmleiste (7) der Sonderplanscheibe (2)
dargestellt, die mit der horizontalen, entsprechend
angepaßten Ausnehmung in der Wechselpalette (3)
eingreift.

Die Wechselpalette (3) gelangt von einer seitlich neben der Bearbeitungsmaschine (1) angeordneten 90°-Schwenkeinrichtung (9) zur Bearbeitungsstation. Dies ist durch den Pfeil (10) angedeutet. Die Schwenkeinrichtung (9) verfügt ebenfalls
über eine aufgesetzte Rollenbahn (11) zur Zu- und
Abführung der waagrecht liegenden Wechselpaletten zur bzw. von der Bearbeitungsstation der Bearbeitungsmaschine (1). Hierfür wird die Wechselpalette in der Fig. 2 von rechts nach links in die
Bearbeitungsstation eingeschoben.

Die Sonderplanscheibe (2) weist zwei Anschlagsflächen (12, 13) auf, die einen Winkel α
einschließen, d. h. die als prismenförmige Anschlagsflächen ausgebildet sind. Der Schnittpunkt
(14) der Anschlagsflächen (12, 13) liegt auf der
waagrechten bzw. horizontalen Symmetrieachse
(15) der Bearbeitungsstation, die mit der Symmetrieachse (15) der Schwenkeinrichtung (9) fluchtet.

Gleichermaßen weist die Wechselpalette (3)
Anschlagsflächen (16, 17) auf, die ebenfalls V-
förmig zueinander angeordnet sind und den gleichen Winkel α einschließen, wie die Anschlagsflächen (12, 13) der Sonderplanscheibe (2). Die Anschlagsflächen (12, 13) der Sonderplanscheibe sowie die Anschlagsflächen (16, 17) der Wechselpalette sind demnach derart aufeinander angepaßt,
daß sie bei genauestem Zusammenfügen die Endlage bzw. die Endjustierung der Wechselpalette auf
der Sonderplanscheibe einstellen.

Für die genaueste Justierung der Wechselpalette weist die Rollenbahn (8) der Sonderplanscheibe (2) eine spezielle Paßrolle (18) auf, die genauestens an die Schmalführung (6) der Wechselpalette
(3) angepaßt ist. Die übrigen Rollen der Rollenbahn
(8) können mit gröberen Toleranzen gegenüber der
Schmalführung (6) gefertigt sein.

Der Arbeitsablauf der erfindungsgemäßen Bearbeitungsmaschine wird anhand der Figuren 2 und
3 erläutert.

Um eine optimale Justierbarkeit des Werkstücks (4) auf der Wechselpalette (3) zu erzielen,
wird die Wechselpalette in waagrechter Position
mit dem Werkstück bestückt und auf einer nicht
näher dargestellten Transportbahn in die Schwenkeinrichtung (9) gefahren. Die Schwenkeinrichtung
(9) schwenkt die Wechselpalette (3) um 90° von
einer waagrechten in die senkrechte Lage. Von der
Rollenbahn (11) der Schwenkeinrichtung (9) wird
die vertikal stehende Wechselpalette (3) dann in
die Bearbeitungsmaschine (1) zur Bearbeitungsstation gefahren. Dies entspricht der in Fig. 2 dargestellten Lage. Dabei wird die Wechselpalette (3)
nur bis zur ungefähren Endlage, d. h. noch nicht in
die endgültige Position gebracht.

Durch Drehung der Hauptspindel (19) der Bearbeitungsmaschine (1) wird die Sonderplanscheibe
(2) mit der darauf befindlichen Wechselpalette (3)
um 90° in die in Fig. 3 dargestellte Position gebracht, d. h. die vorher horizontale Symmetrieachse (15) liegt nun in der Vertikalen. Die Wechselpalette (3) legt sich nun mit ihren prismenförmigen
Anlageflächen (16, 17) durch ihr Eigengewicht in
die prismenförmigen Anlageflächen (12, 13) der
Sonderplanscheibe (2). Dabei wird ein Verdrehen
der Wechselpalette (3) gegenüber der Sonderplanscheibe (2) durch die Paßrolle (18) verhindert. Hierdurch ergibt sich eine absolut senkrechte Längsachse (15) der Wechselpalette (3).

Die T-förmigen Klemmleisten (7) ziehen dann
die Wechselpalette (3) nach erfolgter Justierung
hydraulisch an die Planfläche der Sonderplanscheibe (2) an und klemmen diese in dieser Stellung
fest.

In den Figuren 2 und 3 ist der Winkel α durch
die Strahlen (20, 21) näher gekennzeichnet, die
durch die Anschlagsflächen der prismenförmigen
Anlageflächen laufen. Der Schnittpunkt (14) des
Winkels α liegt stets auf der Symmetrieachse (15),
so daß diese die Winkelhalbierende des Winkels α
bildet. Vorteilhaft ist, wenn der Mittelpunkt der Paßrolle (18) mit dem Schnittpunkt (14) des Winkels α zusammenfällt, um ein genaues Ausrichten der Wechselpalette am Anschlagsprisma zu ermöglichen.

Anstelle der Drehbewegung der Sonderplanscheibe um 90°, um die Justierung der Wechselpalette durch Eigengewicht zu erzeugen, kann diese auch durch einen nicht näher dargestellten Stößel mittels der Kraft (22) in das Anschlagsprisma eingeschoben werden.

Der Winkel α beträgt vorzugsweise 90°. Er kann jedoch auch kleiner ausgebildet werden, um die V-förmige Öffnung kleiner zu gestalten und damit die Gleitflächen steiler auszubilden.

**Patentansprüche**

1. Bearbeitungsmaschine mit einer Einrichtung zur Aufnahme und Justierung von Wechselpaletten und mit einer Einrichtung zur Zuführung der Wechselpalette zur Bearbeitungsstation einer Bearbeitungsmaschine, dadurch gekennzeichnet, daß die Wechselpalette (3) über eine horizontale Schmalführung (6) einer Palettenaufnahme an einer Sonderplanscheibe (2) der Bearbeitungsmaschine (1) zuführbar ist, daß die Sonderplanscheibe (2) und die Wechselpalette (3) wenigstens je zwei aufeinander angepaßte, prismenförmige Anlageflächen (12, 13 bzw. 16, 17) (Prismenanschlag) aufweisen, die einen Winkel α einschließen, wobei die horizontale Einschub- und Symmetrieachse (15) die Winkelhalbierende des Winkels α bildet, daß das formschlüssige Zusammenführen der Anlageflächen (12, 13 bzw. 16, 17) entweder mittels Drehung der Sonderplanscheibe (2) mit Wechselpalette (3) um 90° durch Eigengewicht der Wechselpalette (3) oder durch seitliches Andrücken (Kraft 22) der Wechselpalette (3) gegen die Prismenanschläge (12, 13) erfolgt und daß die Wechselpalette (3) mittels einer Klemmvorrichtung (7) in ihrer justierten Lage mit der Sonderplanscheibe (2) verspannbar ist.

2. Bearbeitungsmaschine nach Anspruch 1, dadurch gekennzeichnet, daß die Schmalführung (6) als Rollenführung ausgebildet ist, mit Rollenbahn (8) auf der Sonderplanscheibe (2).

3. Bearbeitungsmaschine nach Anspruch 2, dadurch gekennzeichnet, daß die letzte Rolle (18) der Rollenbahn (8) als Paßrolle (18) mit geringsten Toleranzen ausgebildet ist, wobei die Paßrolle (18) vorzugsweise im Schnittpunkt (14) der verlängerten Anlageflächen (12, 13) (Schnittpunkt des Winkels α) angeordnet ist.

4. Bearbeitungsmaschine nach einem oder mehreren der vorhergehenden Ansprüche, dadurch gekennzeichnet, daß die Wechselpalette (3) parallel zur Schmalführung (6) wenigstens eine T-förmige Aussparung aufweist, zur Aufnahme einer angepaßten T-förmigen Klemmleiste (7) der Sonderplanscheibe (2), wobei die Klemmleiste (7) zur reibschlüssigen Verbindung von Wechselpalette (3) und Sonderplanscheibe (2) hydraulisch anziehbar ist.

5. Bearbeitungsmaschine nach einem oder mehreren der vorhergehenden Ansprüche, dadurch gekennzeichnet, daß seitlich der Bearbeitungsmaschine (1) eine Schwenkeinrichtung (9) mit Rollen-Schmalführung (11) angeordnet ist, zur Durchführung einer Schwenkbewegung der Wechselpalette (3) aus einer Horizontalebene in eine Vertikalebene.

6. Bearbeitungsmaschine nach einem oder mehreren der vorhergehenden Ansprüche, dadurch gekennzeichnet, daß der von den Anschlagsflächen (12, 13 bzw. 16, 17) eingeschlossene Winkel α eine Größe zwischen α ≈ 60° bis 90° und vorzugsweise α = 90° aufweist.

**Claims**

1. A processing machine with an arrangement for taking up and adjusting interchangeable pallets and with an arrangement for feeding the interchangeable pallet to the processing station of a processing machine, characterised in that the interchangeable pallet (3) can be fed via a horizontal narrow guide (6) to a pallet holder on a special face plate (2) of the processing machine (1) and in that the special face plate (2) and the interchangeable pallet (3) of at least two mutually attuned prismatic bearing surfaces (12, 13 or 16, 17) (prismatic abutment), which enclose an angle α, the horizontal axis (15) of insertion and symmetry forms the bisector of the angle α and in that the positive convergence of the abutting faces (12, 13 or 16, 17) is accomplished either by means of rotation of the special face plate (2) with interchangeable pallet (3) through 90° by the inherent weight of the interchangeable pallet (3) or by the application of lateral pressure (force 22) of the interchangeable pallet (3) against the prismatic abutments (12, 13) and in that the interchangeable pallet (3) can by means of a clamping device (7) be clamped in its adjusted position in relation to the special face plate (2).

2. A processing machine according to Claim 1, characterised in that the narrow guide (6) is constructed as a roller guide with a rollway (8) on the special face plate (2).

3. A processing machine according to Claim 2, characterised in that the last roller (18) on the rollway (8) is constructed as a fitting roller (18) with minimal tolerances, the fitting roller (18) preferably being disposed at the point of intersection (14) of the extended abutment surfaces (12, 13) (point of intersection of the angle α).

4. A processing machine according to one or more of the preceding Claims, characterised in that the interchangeable pallet (3) has parallel with the narrow guide (6) at least one T-shaped recess to accommodate a matching T-shaped clamping strip (7) on the special face plate (2), the clamping strip (7) being adapted to be tightened hydraulically to establish a frictional connection between the interchangeable pallet (3) and the special face plate (2).

5. A processing machine according to one or more of the preceding Claims, characterised in that laterally of the processing machine (1) there is a pivoting arrangement (9) with a roller type of narrow guide (11) for performing a pivoting movement of the interchangeable pallet (3) out of a horizontal plane into a vertical plane.

6. A processing machine according to one or more of the preceding Claims, characterised in that the size of the angle α enclosed by the abutment surfaces (12, 13 and 16, 17) is between α ≈ 60° to 90° and preferably α ≈ 90°.

**Revendications**

1. Machine-outil comportant un dispositif pour la réception et l'ajustage de palettes interchangeables et un dispositif pour l'amenée de la palette au poste d'usinage d'une machine-outil, caractérisée en ce que la palette interchangeable (3) peut être amenée par l'intermédiaire d'un guide étroit horizontal (6) à un récepteur de palette sur un plateau circulaire spécial (2) de la machine-outil (1), en ce que le plateau circulaire spécial (2) et la palette (3) présentent, chacun, au moins deux surfaces d'appui prismatiques (12,13 et 16, 17), adaptées les unes aux autres (butée prismatique), qui forment un angle α, l'axe de symétrie et d'introduction horizontal (15) formant la bissectrice de l'angle α, en ce que la jonction mécanique des surfaces d'appui (12,13 ou 16,17) est obtenue soit par rotation du plateau circulaire spécial (2) avec la palette (3) de 90° par le poids propre de la palette (3), soit par pressage latéral (force 22) de la palette (3) contre les butées prismatiques (12,13), et en ce que la palette (3) peut être serrée au moyen d'un dispositif de serrage (7) dans sa position ajustée avec le plateau circulaire spécial (2).

2. Machine-outil selon la revendication 1, caractérisée en ce que le guide étroit (6) est réalisé en tant que guide à rouleaux, avec transporteur à rouleaux (8) sur le plateau circulaire spécial (2).

3. Machine-outil selon la revendication 2, caractérisée en ce que le dernier rouleau (18) du transporteur (8) est réalisé en tant que rouleau ajusté (18) à très faibles tolérances, le rouleau (18) étant agencé, de préférence, au point d'intersection (14) des surfaces d'appui prolongées (12,13) (sommet de l'angle α).

4. Machine-outil selon une ou plusieurs des revendications précédentes, caractérisée en ce que la palette (3) présente au moins un évidement en forme de T parallèlement au guide étroit (6), pour la réception d'une baguette de fixation adaptée en forme de T (7) du plateau circulaire spécial (2), la baguette de fixation (7) pouvant être serrée hydrauliquement pour relier par friction la palette (3) et le plateau circulaire spécial (2).

5. Machine-outil selon une ou plusieurs des revendications précédentes, caractérisée en ce que, latéralement à la machine-outil (1), est agencé un dispositif de pivotement (9) à guide étroit à rouleaux (11), pour effectuer un mouvement de pivotement de la palette (3) en dehors d'un plan horizontal dans un plan vertical.

6. Machine-outil selon une ou plusieurs des revendications précédentes, caractérisée en ce que l'angle α formé par les surfaces d'appui (12,13 et 16,17) est compris entre α ~ 60° à 90° et, de préférence, α = 90°.

Fig 1

Fig 2

Fig 3